# EUROPEAN PATENT SPECIFICATION

(11) **EP 2 154 689 B1**
(45) Date of publication and mention of the grant of the patent: **08.07.2015**
(21) Application number: 09167661.9
(22) Date of filing: 11.08.2009
(51) Int. Cl.: H01B 1/20, H01B 1/22, H01B 1/24

(54) **Durable transparent conductors on polymeric substrates**
Haltbare transparente Leiter auf polymerischen Substraten
Conducteurs transparents longue durée sur substrats polymères

(30) Priority: 12.08.2008 US 190025
(43) Date of publication of application: 17.02.2010
(73) Proprietor: The Boeing Company, Chicago, IL 60606-2016 (US)
(72) Inventor: Zhou, Chaoyin, Chino, CA 91708 (US); Burns, Richard,W., Edwardsville IL 62025 (US)
(74) Representative: Howson, Richard G.B.

(56) References cited:
- WO-A1-2008/001998
- US-A1- 2005 064 647
- US-A1- 2008 102 213

## Description

### BACKGROUND OF THE INVENTION

The field of the invention relates generally to transparent conductors, and more specifically, to durable transparent conductors on polymeric substrates.

Transparent conducting oxides are commonly referred to as a group of transparent conductors. These transparent conducting oxides are generally defined by one or both of their conductivity and transparency. These conductors have been widely used in a variety of applications including, anti-static coatings, touch screens, flexible displays, electroluminescent devices, electrochromic systems, solar cells, and energy efficient windows, to name a few. The individual applications normally require a certain conductivity and transparency for the materials. Sometimes more stringent requirements may be imposed to ensure the structural and functional integrity of the transparent conducting oxides when the application is deployed in an extreme environment.

Technology associated with the preparation of durable transparent conductors has been key in the development of anti-static coatings, touch screens, flexible displays, and the like. All of these applications are dependent upon excellent performance in the electrical, optical, and mechanical properties of the transparent conductor.

Indium-tin-oxide (ITO) thin films are one of the most common transparent conductors and have been prepared on polymeric substrates such as polyesters or polycarbonates by using sputtering, chemical vapor deposition (CVD), electron beam evaporation, reactive deposition, and pulsed laser deposition. Such approaches usually require high temperature annealing or ultraviolet laser processing, which can damage the polymeric substrates and induce structural and color change, especially if the polymers are aromatics-based systems. In addition, compressive internal stresses can be developed and can easily initiate tensile cracking on ITO thin films.

### BRIEF DESCRIPTION OF THE INVENTION

US 2005/064/647 relates to providing a wire excellent in electrical characteristics or in mechanical characteristics. A wire is constructed at least by a carbon nanotube structure layer in which plural carbon nanotubes mutually cross-link to configure a mesh structure on the surface of a substrate. A method of manufacturing the wire includes: an applying step of applying to the surface of the substrate a liquid solution containing a carbon nanotube having a functional group; and a step of curing the liquid solution after the application. An electromagnet scarcely causing a loss is formed using the wire.

WO 2008/001998 relates to a method for preparing a transparent electrode using a carbon nanotube (CNT) film, and more particularly, to a method for preparing a transparent electrode, the method comprising the steps of forming a CNT film on a desired substrate using a dispersed solution of CNT and then reducing/forming metal nanoparticles on the surface of the CNT film. According to the present invention, a transparent electrode in which gold nanoparticles are formed on the surface of high density CNT film having high purity, can be prepared. The inventive transparent electrode has high visible ray penetration and an excellent electrical conductivity by hyperfine metal particles uniformly formed on the surface thereof as well as a uniform increase in electrical conductivity over the whole CNT film, and thus it can be applied to various displays as well as image sensors, solar cells, touch panels, digital papers, electromagnetic shielding agents, static charge preventing agents and the like.

US 2008/102213 provides a method for selectively placing carbon nanotubes on a substrate surface by using functionalized carbon nanotubes having an organic compound that is covalently bonded to such carbon nanotubes. The organic compound comprises at least two functional groups, the first of which is capable of forming covalent bonds with carbon nanotubes, and the second of which is capable of selectively bonding metal oxides. Such functionalized carbon nanotubes are contacted with a substrate surface that has at least one portion containing a metal oxide. The second functional group of the organic compound selectively bonds to the metal oxide, so as to selectively place the functionalized carbon nanotubes on the at least one portion of the substrate surface that comprises the metal oxide.

The present invention is set out in the independent claims, with some optional features set out in the claims dependent thereto.

### BRIEF DESCRIPTION OF THE DRAWINGS

Figure 1 illustrates surface modifications on transparent conductive oxide (TCO) conductors and conversion of hydroxyl functional group into different functional groups.
Figure 2 illustrates surface modifications on carbon conductors.
Figure 3 illustrates some representative structures of the dispersants utilized in a transparent conductor fabrication process. TBDMS is an abbreviation of tert-butyl dimethylsilyl.
Figure 4 illustrates some representative structures of the dispersants utilized in a transparent conductor fabrication process.
Figure 5 illustrates surface modifications on a transparent conductive oxide (TCO) conductor by introducing an acrylate onto the surface of the conductor.
Figure 6 is a flowchart illustrating a method of preparing a transparent nanoconductor for application to a polymeric substrate.

### DETAILED DESCRIPTION OF THE INVENTION

The embodiments described herein are related to transparent conductors and more specifically to the composition and processes utilized to prepare transparent conductors on polymeric substrates. Examples of such conductors include transparent conductive oxides such as indium tin oxide (ITO), doped zinc oxide (ZnO), cadmium oxide (CdO), and antimony doped tin oxide (Sb-SnO₂). Other conductor examples include graphene sheet, carbon nanotubes, silver, copper, gold, nickel, or their hybrids. Such conductors are modified on the surface (i.e., functionalized), and chemically linked to a polymeric substrate. As further described herein, conductors having nanometer dimensions are preferred. Conductors having such dimensions are generally referred to herein as nanoconductors and include nanowires, nanotubes, nanorods, nanobelts, nanoribbons, and nanoparticles. These conductors can be applied onto the polymeric substrates by spin coating, spraying, dip coating, screen printing, and ink-jet printing.

The processes disclosed herein focus on the preparation of transparent conductors for application to substrates, and in particular for application to polymeric substrates. As will be discussed, at least one of the disadvantages of the prior art is addressed. Specifically, when thin films of transparent conductors are disbursed on polymeric substrates, they are prone to developing cracks due to stresses and strains to which the conductors are exposed. It is possible in certain applications to have the entire layer of the thin film peel away from the substrate.

In one embodiment described herein, a good durability of the transparent conductors is accomplished due to a strong covalent bond that exists between the transparent conductor and a dispersant that links the conductor to the polymeric substrate. This chemical bonding effectively integrates the transparent conductor material and the polymeric substrate together and ensures good stability of the transparent conductor system, even though the two components (transparent conductors and polymeric substrates) have very different mechanical, physical, and chemical properties.

An additional advantage in the described embodiments is found in a reduced manufacturing cost associated with the transparent conductors. More specifically, the transparent conductors described in this disclosure may be prepared using simple chemical procedures and without the use of high vacuum equipments and processes. The transparent conductors may also include inexpensive materials such as graphite. Incorporation of such materials is vastly different from current thin film deposition technologies and contributes to the cost savings mentioned herein.

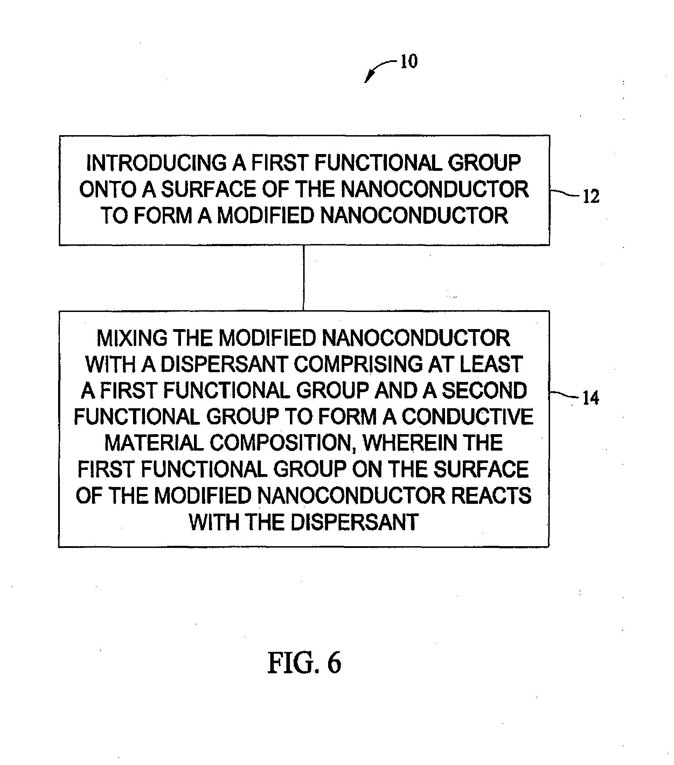

In one particular embodiment, the present disclosure is directed to a method of preparing a transparent nanoconductor for application to a polymeric substrate. Figure 6 is a flowchart 10 illustrating this process. Specifically, the conductors are prepared by first introducing 12 a functional group onto a surface of the nanoconductor to form a modified nanoconductor. The modified nanoconductor is then mixed 14 with a dispersant, preferably at elevated temperatures, to form a conductive material composition. The dispersant is at least bifunctional, and comprises at least a first functional group and a second functional group. Upon mixing, the functional group on the surface of the modified nanoconductor reacts with the dispersant, and in particular, with one of the functional groups on the dispersant. The resulting mixture is a conductive material composition, which may be a resin, paste or ink.

The conductive material composition may then be applied to the polymeric substrate. The remaining unreacted functional group on the dispersant chemically reacts with the polymeric substrate to form a covalent bond. This chemical bonding effectively integrates the conductors and the polymeric substrate, ensuring good stability.

In another embodiment, the present disclosure is directed to a conductive material composition. The conductive material composition may be applied to the polymeric substrate to form an integrated product. The conductive material composition comprises a conductor, a dispersant, and a solvent.

The conductors generally include one or more different material types such transparent conductive oxides, metals, and combinations thereof. The transparent conductive oxides (TCOs) may include, for example, indium tin oxide (ITO), doped zinc oxide (ZnO), cadmium oxide (CdO), antimony doped tin oxide (Sb-SnO₂), and combinations thereof. The metal conductors include silver, copper, nickel, gold, and combinations thereof. The conductivity of the TCOs is typically on the order of about 10⁻⁴ ohms-centimeter. Silver, copper, and gold are typically the best metal conductors and can conduct in the range of about 100 - 1000 times better than the TCOs.

The above described conductors may be used alone or in combination with other conductors in the compositions and methods of the present disclosure. A hybrid (i.e., a combination of two or more) of the conductive materials introduced above may offer improved properties in conductivity and transparency as compared to a conductor that incorporates only a single one of the above listed conductive materials. All of the conductive materials can be used at nanometer scales. Conductors having such dimensions are generally referred to herein as nanoconductors and include, but are not limited to, nanowires, nanotubes, nanorods, nanobelts, nanoribbons, and nanoparticles. As used herein, the term "conductors" is thus intended to include nanoconductors.

As noted above, the conductors are modified to introduce a functional group onto a surface of the conductor. Suitable functional groups include, but are not limited to, hydroxyl (OH), amine (NH₂), mercapto (SH), carboxyl (COOH), sulfonyl chloride (SO₂Cl), vinyl (-C=C), acrylate (C=C-C=O), epoxy groups, ester, and combinations thereof. Any suitable method may be used to introduce the functional group onto the surface of the conductor. The method used to introduce the functional group may vary depending on the type of conductor.

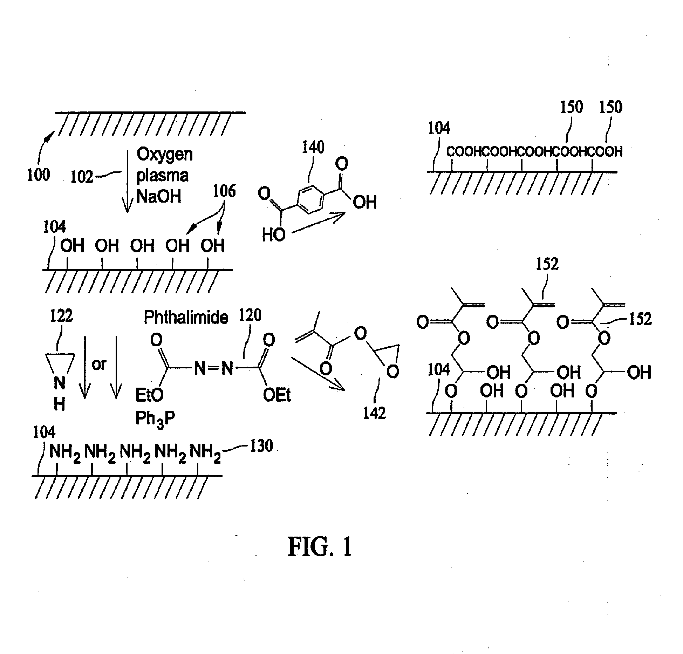

For example, in one particular embodiment, the conductor may be a transparent conductive oxide (TCO) and the functional group may be a hydroxyl group. The hydroxyl group may be introduced onto the surface of the TCO conductor by subjecting the surface of the conductor to a cleaning process, such as is illustrated in Figure 1.

Specifically, as can be seen in Figure 1, a nanowire conductor 100 comprising a conductor material such as indium tin oxide (ITO), is cleaned by sequential ultrasonic cleaning in deionized water, methanol, isopropyl alcohol, and acetone. In one particular embodiment, each step of the sequential ultrasonic cleaning is performed for about ten minutes. After the ultrasonic cleansing, the conductor is dried in air, and then exposed to oxygen plasma 102 for about five minutes at room temperature. In a specific embodiment, the oxygen plasma exposure is conducted at an oxygen pressure of about 200 mtorr and a plasma power of about 30W. The conductors 100 are then immersed in a 0.05M sodium hydroxide (NaOH) solution for about five minutes and washed thoroughly with copious amounts of deionized water and dried in air. At the completion of this processing, the surface 104 of the ITO nanowire 100 should contain hydroxyl groups 106.

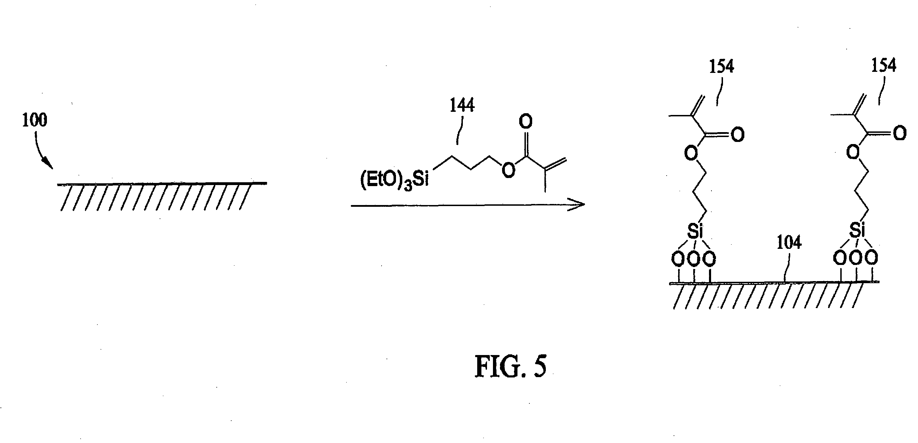

In another embodiment, the conductor 100 may be a transparent conductive oxide and the functional group is an acrylate 154. In this embodiment, as shown in Figure 5, the acrylate functional group 154 can be introduced onto the surface 104 of the conductor by exposing the conductor 100 to an acrylate reagent 144 at a temperature of about 80°C overnight. Other functional groups may also be introduced onto the surface of the conductor using similar techniques.

Once the surface of the TCO conductor has been modified by introducing a first functional group onto the surface, the modified surface may optionally be further modified by converting the functional group to one or more different functional groups. Examples of such additional functional groups include, but are not limited to, an acrylate, an epoxy group, an ester, an amine, a mercapto group, sulfonyl chloride, vinyl, and a carboxyl group. Any suitable method may be used to convert the first functional group into one or more additional functional groups. This may be done, for example, by reacting the first functional group on the surface of the conductor with one or more reactant.

Some specific examples of such reactions are illustrated in Figure 1. Specifically, as can be seen from Figure 1, if the first functional group is a hydroxyl group 106, the conductor 100 comprising the hydroxyl groups 106 on the surface 104 thereof may be combined with a reactant such as phthalamide 120 or aziridine 122, or other amides or polyimides (not shown). The resulting reaction converts the hydroxyl groups 106 on the surface 104 of the conductor 100 into amine (NH₂) groups 130. Alternately, the hydroxyl groups 106 on the surface 104 of the conductor 100 can be reacted with a reactant such as an ester 140, or an amide, polycarbonate, or polyimide (not shown), at slightly elevated temperatures, which converts the hydroxyl groups 106 into carboxyl groups 150. In another alternative, the hydroxyl groups 106 on the surface 104 of the conductor 100 can be reacted with a reactant such as an epoxide 142 at slightly elevated temperatures, which converts the hydroxyl groups 106 into acrylate groups 152. Other suitable reactants may also be used. These reactions are general chemical transformations and can readily be achieved by one skilled in the art. The reactions provide a convenient method for modifying the surface 104 of TCO conductors 100 into desired functional groups.

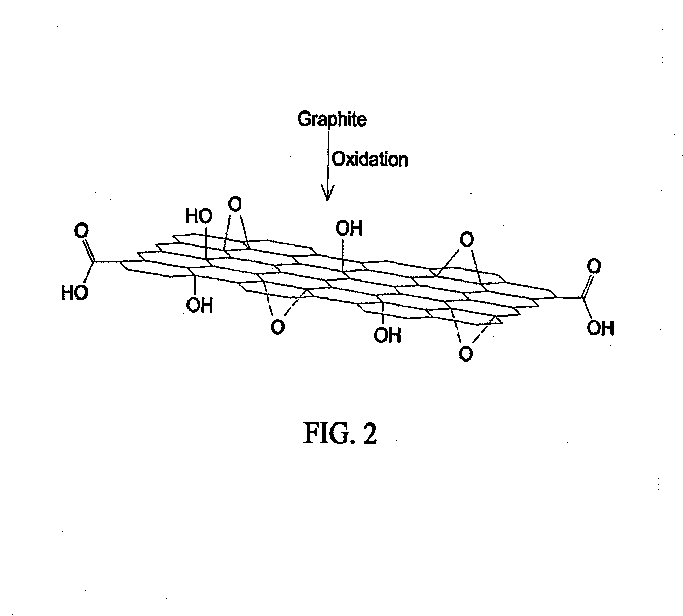

In another embodiment not part of the present invention, the conductor may be a carbon conductor, such as graphene. Functional groups may be introduced onto such a conductor by oxidizing graphite using potassium permanganate (KMnO₄) and sulfuric acid (H₂SO₄). This oxidation followed by a cleaning process generates hydroxyl groups, epoxide, and carboxyl functional groups on the surface of the graphene. This is illustrated in Figure 2.

Once the surface of the conductor has been modified by introducing a first functional group onto the surface, the modified surface may optionally be further modified by converting the functional group to one or more different functional groups. Examples of such additional functional groups include, but are not limited to, an acrylate, an epoxy group, an ester, an amine, a mercapto group, sulfonyl chloride, vinyl, and a carboxyl group. Any suitable method may be used to convert the first functional group into one or more additional functional groups. This may be done, for example, by reacting the first functional group on the surface of the conductor with one or more reactant, as described above for TCO conductors.

Once the surface of the conductor has been modified by introducing a functional group thereon, the modified conductor is mixed with a dispersant, and a solvent, to form a conductive material composition. Typically, the conductive material composition will comprise the conductor in an amount of from about 0.5% (by weight of the composition) to about 90% (by weight of the composition), and dispersants in an amount of from about 10% (by weight of the composition) to about 90% (by weight of the composition). The exact amounts of conductor and dispersant present in the conductive material composition will vary depending on the specific application or requirements of conductivity and transmittance of the product produced.

The dispersants used in the compositions and methods of the present disclosure help with dispersing the conductors throughout the conductive material composition. Additionally, as noted above, the dispersants also act as a linker to chemically bond the conductors to the polymeric substrate, so that the conductors and polymeric substrate are fully integrated. This chemical bonding is achieved through functional groups present on the dispersant. Specifically, the dispersants are at least bifunctional, comprising at least a first functional group and a second functional group. When the dispersants are mixed with the modified conductors, e.g., at slightly elevated temperatures overnight, the functional group(s) on the surface of the conductor reacts with the dispersant, and in particular, with one of the functional groups on the dispersant. This reaction produces a stable, well dispersed conductive material composition, which may be a resin, paste or ink. Additional oligomerization on the modified conductors will improve the dispersity of the conductors in the dispersant. The conductive material composition may then be applied to a substrate, e.g., polycarbonates, polyacrylate, polyurethanes, polyimide (PI), polybenzimidazole (PBI), polybenzothiazole (PBT), polybenzoxazole (PBX), polysulfone, epoxy, or related systems. The remaining unreacted functional group on the dispersant chemically reacts with the polymeric substrate to form a covalent bond upon application of the composition to the substrate. This chemical bonding effectively integrates the conductors and the polymeric substrate, ensuring good stability. In certain instances, functional groups on the conductor may also bond directly onto the polymeric substrate, if the functional groups and polymeric substrate are compatible.

The dispersant may be any suitable substituted or unsubstitued aliphatic or aromatic compound that is at least bifunctional, i.e., comprises at least a first functional group and a second functional group. The first and second functional groups on the dispersant may be the same or alternately may be different functional groups. If the first and second functional groups on the dispersant are the same, preferably, one of the groups is protected during reaction with the conductor. This protection may then be removed prior to application of the conductive material composition to the polymer substrate.

For example, in one embodiment, the dispersant has the structure:

R²-R¹-R³

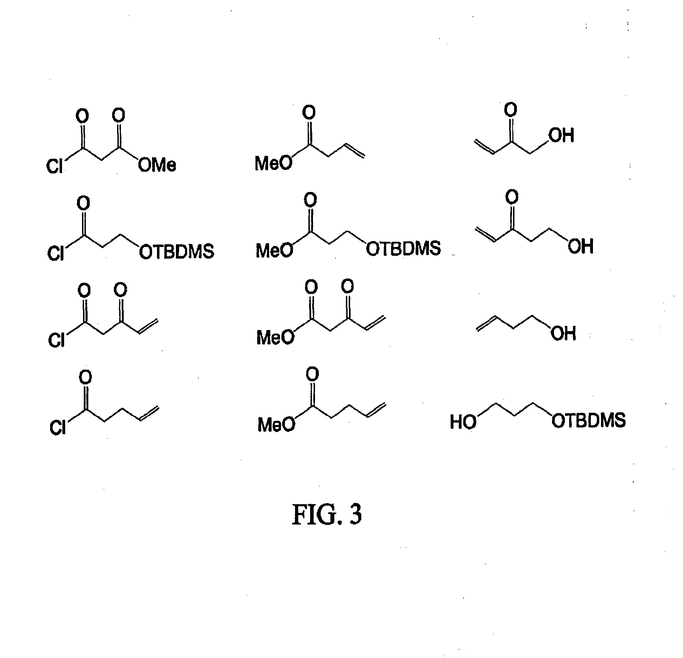

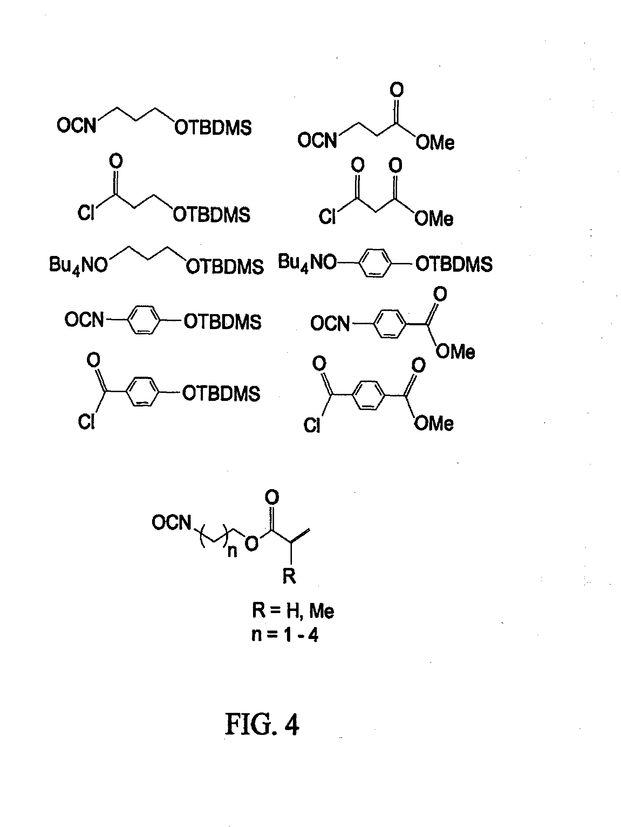

Wherein R¹ is a substituted or unsubstitued aliphatic or aromatic hydrocarbyl moiety; and R² and R³ are functional groups independently selected from the group consisting of acetyl chloride, carboxyl, ester, isocyanates, vinyl, acrylate, amine, aldehyde, and hydroxyl. Specific non-limiting examples of suitable dispersants are illustrated in Figures 3 and 4. It should be understood that the specific examples of dispersants illustrated herein are intended to be non-limiting, and thus may be modified without departing from the scope of the current disclosure.

As noted above, the conductive material composition may further comprise a solvent. When present, the conductive material composition will comprise the solvent in an amount of from about 0.1 % (by weight of the composition) to about 95% (by weight of the composition). The specific amount of solvent used depends on the form of the composition (e.g., ink, paste, resin). A variety of solvents can be used including methanol, ethanol, isopropyl alcohol, N-dimethylformamide, 2-isopropoxyethanol, tetrahydrofuran, acetonitrile, acetone, ethyleneglycol, 2-methoxyethanol, toluene, xylene, benzene, triethylamine, and combinations thereof. The solvents are typically combined with the conductors and dispersants prior to reacting the conductor and dispersant at slightly elevated temperatures, to form the conductive material composition.

As noted above, the conductive material composition can be made in the form of resins, pastes, and inks. The compositions can be applied on the polymeric substrates by any suitable method such as spin coating, spraying, dip-coating, screen printing, and ink-jet printing.

Resulting from the above described processing methods is a conductive material composition for the preparation of transparent conductors on polymeric substrates. The conductive materials composition includes conductors, dispersants, and solvents. With respect to conductors, the conductive materials composition generally includes transparent conductive oxide conductors, including, but not limited to, one or more of indium tin oxide (ITO), doped zinc oxide (ZnO), cadmium oxide (CdO), antimony doped tin oxide (Sb-SnO2);; and metal conductors such as silver, copper, nickel, and gold. The conductors can be nanoconductors, and can be nanotubes, nanowires, nanorods, nanobelts, nanoribbons, nanoparticles, or other forms that have a nanoscale dimension.

The above described embodiments are descriptive of a next generation of transparent conductors. The materials and processes described herein can be quickly incorporated into various production lines and manufacturing processes while also making the resulting systems that incorporate the described embodiments more robust and durable.

The described materials and processes utilize the transparent conductors in nanoscale dimension. As a result, internal stresses are not developed and cracks generally are not initiated within the conductor compositions. As described, the process modifies the surface of nano-conductors (e.g., transparent conductors) and incorporates the conductors into a polymer matrix by covalent bonding. By using such a process, the conductors are fully integrated into a matrix structure. Through various combinations of the processes and methods described herein, the resulting conducting layer is rendered a very durable and robust system.

While the invention has been described in terms of various specific embodiments, those skilled in the art will recognize that the invention can be practiced with modification within the spirit and scope of the claims.

## Claims

1. A conductive materials composition comprising:
a composition formed from mixing a modified nanoconductor selected from the group consisting of transparent conductive oxides, metals, graphene and combinations thereof, wherein the surface of the nanoconductor comprises a first functional group,
with a dispersant comprising at least a first functional group and a second functional group wherein during the mixing the first functional group on the surface of the modified nanoconductor reacts with the dispersant; and wherein
a solvent is selected from a group consisting of isopropyl alcohol, 2-isopropoxyethanol, tetrahydrofuran, acetonitrile, 2-methoxyethanol, triethylamine, and combinations thereof; and
the dispersant has a structure of: R²-R¹-R³;
wherein R¹ is a substituted or unsubstituted aliphatic or aromatic hydrocarbyl moiety; and R² and R³ are functional groups independently selected from the group consisting of acetyl chloride, carboxyl, ester, isocyanates, vinyl, acrylate, amine, aldehyde, and hydroxyl; and wherein
the composition is for application to a polymeric substrate.

2. The conductive materials composition of claim 1 wherein the transparent conductive oxide is selected from the group consisting of indium tin oxide, doped zinc oxide, cadmium oxide, antimony doped tin oxide, and combinations thereof.

3. The conductive materials composition of claim 1 wherein the metal is selected from the group consisting of silver, copper, nickel, gold, and combinations thereof.

4. The conductive materials composition of claim 1 wherein the composition comprises the nanoconductor (100) in an amount of from about 0.5% (by weight composition) to about 90% (by weight composition).

5. The conductive materials composition of claim 1 wherein the composition comprises the solvent in an amount of from about 0.1% (by weight composition) to about 95% (by weight composition).

6. The conductive materials composition of claim 1 wherein the composition comprises the dispersant in an amount of from about 10% (by weight composition) to about 90% (by weight composition).

7. The conductive materials composition of claim 1 wherein the composition is a resin, a paste, or an ink.

8. A method of preparing a transparent nanoconductor (100) for application to a polymeric substrate, the method comprising:
introducing (12) a first functional group onto a surface (104) of the nanoconductor to form a modified nanoconductor, wherein the nanoconductor is selected from the group consisting of transparent conductive oxides, metals, graphene and combinations thereof and the first functional group on the surface (104) of the modified nanoconductor (100) is a hydroxyl group (106);
converting the hydroxyl group (106) on the surface (104) of the modified nanoconductor (100) to a second functional group selected from the group consisting of an acrylate, an epoxy group, an ester, an amine, a mercapto, sulfonyl chloride, vinyl, and a carboxyl group, and
mixing (14) the modified nanoconductor with a solvent and a dispersant comprising at least a first functional group and a second functional group to form a conductive material composition, wherein the first functional group on the surface of the modified nanoconductor reacts with the dispersant; wherein
a solvent is selected from a group consisting of isopropyl alcohol, 2-isopropoxyethanol, tetrahydrofuran, acetonitrile, 2-methoxyethanol, triethylamine, and combinations thereof; and
the dispersant has a structure of: R²-R¹-R³;
wherein R¹ is a substituted or unsubstituted aliphatic or aromatic hydrocarbyl moiety; and R² and R³ are functional groups independently selected from the group consisting of acetyl chloride, carboxyl, ester, isocyanates, vinyl, acrylate, amine, aldehyde, and hydroxyl; and
further comprising applying the conductive material composition to the polymeric substrate.

9. The method of claim 8 wherein the conductive material composition is applied to the polymeric substrate by spin coating, spraying, dip-coating, screen printing, or ink-jet printing.

## Patentansprüche

1. Zusammensetzung leitender Materialien, die aufweist:
eine Zusammensetzung, die gebildet wird durch Mischen eines modifizierten Nanoleiters, der ausgewählt wird aus der Gruppe bestehend aus transparenten leitenden Oxiden, Metallen, Graphen und Kombinationen davon, wobei die Oberfläche des Nanoleiters eine erste Funktionsgruppe aufweist, mit einem Dispergiermittel, das wenigstens eine erste Funktionsgruppe und eine zweite Funktionsgruppe aufweist, wobei während des Mischens die erste Funktionsgruppe auf der Oberfläche des modifizierten Nanoleiters mit dem Dispergiermittel reagiert; und wobei
ein Lösungsmittel ausgewählt wird aus der Gruppe bestehend aus Isopropylalkohol, 2-Isopropoxyethanol, Tetrahydrofuran, Acetonitril, 2-Methoxyethanol, Triethylamin und Kombinationen davon; und
das Dispergiermittel folgende Struktur hat: R²-R¹-R³;
wobei R¹ ein substituierter oder nicht substituierter aliphatischer oder aromatischer Kohlenwasserstoffrest ist;
und R² und R³ Funktionsgruppen sind, die unabhängig ausgewählt werden aus der Gruppe bestehend aus Acetylchlorid, Carboxyl, Ester, Isocyanaten, Vinyl, Acrylat, Amin, Aldehyd und Hydroxyl; und wobei
die Zusammensetzung zum Aufbringen auf ein polymerisches Substrat vorgesehen ist.

2. Zusammensetzung leitender Materialien nach Anspruch 1, wobei das transparente leitende Oxid ausgewählt wird aus der Gruppe bestehend aus Indiumzinnoxid, dotiertem Zinkoxid, Kadmiumoxid, Antimon-dotiertem Zinnoxid und Kombinationen davon.

3. Zusammensetzung leitender Materialien nach Anspruch 1, wobei das Metall ausgewählt wird aus der Gruppe bestehend aus Silber, Kupfer, Nickel, Gold und Kombinationen davon.

4. Zusammensetzung leitender Materialien nach Anspruch 1, wobei die Zusammensetzung den Nanoleiter (100) in einer Menge von ca. 0,5 % (Zusammensetzungsgewicht) bis ca. 90 % (Zusammensetzungsgewicht) aufweist.

5. Zusammensetzung leitender Materialien nach Anspruch 1, wobei die Zusammensetzung das Lösungsmittel in einer Menge von ca. 0,1 % (Zusammensetzungsgewicht) bis ca. 95 % (Zusammensetzungsgewicht) aufweist.

6. Zusammensetzung leitender Materialien nach Anspruch 1, wobei die Zusammensetzung das Dispergiermittel in einer Menge von ca. 10 % (Zusammensetzungsgewicht) bis ca. 90 % (Zusammensetzungsgewicht) aufweist.

7. Zusammensetzung leitender Materialien nach Anspruch 1, wobei die Zusammensetzung ein Harz, eine Paste oder eine Tinte ist.

8. Verfahren zum Herstellen eines transparenten Nanoleiters (100) zum Aufbringen auf ein polymerisches Substrat, wobei das Verfahren umfasst:
Aufbringen (12) einer ersten Funktionsgruppe auf eine Oberfläche (104) des Nanoleiters, um einen modifizierten Nanoleiter zu bilden, wobei der Nanoleiter ausgewählt wird aus der Gruppe bestehend aus transparenten leitenden Oxiden, Metallen, Graphen und Kombinationen davon, und wobei die erste Funktionsgruppe auf der Oberfläche (104) des modifizierten Nanoleiters (100) eine Hydroxylgruppe (106) ist;
Umwandeln der Hydroxylgruppe (106) auf der Oberfläche (104) des modifizierten Nanoleiters (100) in eine zweite Funktionsgruppe, die ausgewählt wird aus der Gruppe bestehend aus einem Acrylat, einer Epoxygruppe, einem Ester, einem Amin, einem Mercapto, Sulfonylchlorid, Vinyl und einer Carboxylgruppe, und
Mischen (14) des modifizierten Nanoleiters mit einem Lösungsmittel und einem Dispergiermittel, das wenigstens eine erste Funktionsgruppe und eine zweite Funktionsgruppe aufweist, um eine Zusammensetzung leitender Materialien zu bilden, wobei die erste Funktionsgruppe auf der Oberfläche des modifizierten Nanoleiters mit dem Dispergiermittel reagiert; wobei
ein Lösungsmittel ausgewählt wird aus der Gruppe bestehend aus Isopropylalkohol, 2-Isopropoxyethanol, Tetrahydrofuran, Acetonitril, 2-Methoxyethanol, Triethylamin und Kombinationen davon; und
das Dispergiermittel folgende Struktur hat: R²-R¹-R³;
wobei R¹ ein substituierter oder nicht substituierter aliphatischer oder aromatischer Kohlenwasserstoffrest ist;
und R² und R³ Funktionsgruppen sind, die unabhängig ausgewählt werden aus der Gruppe bestehend aus Acetylchlorid, Carboxyl, Ester, Isocyanaten, Vinyl, Acrylat, Amin, Aldehyd und Hydroxyl; und
wobei das Verfahren des Weiteren das Aufbringen der Zusammensetzung leitender Materialien auf das polymerische Substrat umfasst.

9. Verfahren nach Anspruch 8, wobei die Zusammensetzung leitender Materialien durch Rotationsbeschichtung, Sprühen, Tauchbeschichtung, Siebdruck oder Tintenstrahldruck auf das polymerische Substrat aufgebracht wird.

## Revendications

1. Composition de matières conductrices comprenant :
une composition formée par le mélange d'un nanoconducteur modifié sélectionné à partir du groupe constitué d'oxydes conducteurs transparents, de métaux, de graphène et de combinaisons de ceux-ci, dans laquelle la surface du nanoconducteur comprend un premier groupe fonctionnel, avec un dispersant comprenant au moins un premier groupe fonctionnel et un second groupe fonctionnel dans lesquels pendant le mélange le premier groupe fonctionnel sur la surface du nanoconducteur modifié réagit avec le dispersant ; et dans laquelle
un solvant est sélectionné à partir d'un groupe constitué d'alcool isopropylique, 2-isopropoxyéthanol, tétrahydrofuranne, acétonitrile, 2-méthoxyéthanol, triéthylamine et des combinaisons de ceux-ci ; et
le dispersant a une structure de : R²-R¹-R³ ;
dans laquelle R¹ est une fraction hydrocarbyle aliphatique ou aromatique substituée ou non substituée ; et R² et R³ sont des groupes fonctionnels indépendamment sélectionnés à partir du groupe constitué du chlorure d'acétyle, carboxyle, ester, isocyanates, vinyle, acrylate, amine, aldéhyde et hydroxyle ; et dans laquelle
la composition est pour application à un substrat polymère.

2. Composition de matières conductrices selon la revendication 1, dans laquelle l'oxyde conducteur transparent est sélectionné à partir du groupe constitué d'oxyde d'étain dopé à l'indium, oxyde de zinc dopé, oxyde de cadmium, oxyde d'étain dopé à l'antimoine et des combinaisons de ceux-ci.

3. Composition de matières conductrices selon la revendication 1, dans laquelle le métal est sélectionné à partir du groupe constitué par l'argent, le cuivre, le nickel, l'or et des combinaisons de ceux-ci.

4. Composition de matières conductrices selon la revendication 1, dans laquelle la composition comprend le nanoconducteur (100) en une quantité d'environ 0,5 % (composition en poids) à environ 90 % (composition en poids).

5. Composition de matières conductrices selon la revendication 1, dans laquelle la composition comprend le solvant en une quantité d'environ 0,1 % (composition en poids) à environ 95 % (composition en poids).

6. Composition de matières conductrices selon la revendication 1, dans laquelle la composition comprend le dispersant en une quantité d'environ 10 % (composition en poids) à environ 90 % (composition en poids).

7. Composition de matières conductrices selon la revendication 1, dans laquelle la composition est une résine, une pâte, ou une encre.

8. Procédé de préparation d'un nanoconducteur transparent (100) pour application à un substrat polymère, le procédé comprenant :
l'introduction (12) d'un premier groupe fonctionnel sur une surface (104) du nanoconducteur pour former un nanoconducteur modifié, dans lequel le nanoconducteur est sélectionné à partir du groupe constitué d'oxydes conducteurs transparents, de métaux, de graphène et de combinaisons de ceux-ci et le premier groupe fonctionnel sur la surface (104) du nanoconducteur modifié (100) est un groupe hydroxyle (106) ;
transformation du groupe d'hydroxyle (106) sur la surface (104) du nanoconducteur modifié (100) en un second groupe fonctionnel sélectionné à partir du groupe constitué d'un acrylate, un groupe époxy, un ester, une amine, un mercapto, chlorure de sulfonyle, vinyle et un groupe carboxyle, et
le mélange (14) du nanoconducteur modifié avec un solvant et un dispersant comprenant au moins un premier groupe fonctionnel et un second groupe fonctionnel pour former une composition de matière conductrice, dans laquelle le premier groupe fonctionnel sur la surface du nanoconducteur modifié réagit avec le dispersant ; dans lequel
un solvant est sélectionné à partir d'un groupe constitué par de l'alcool isopropylique, 2-isopropoxyéthanol, tétrahydrofuranne, acétonitrile, 2-méthoxyéthanol, triéthylamine et des combinaisons de ceux-ci, et
le dispersant a une structure de : R²-R¹-R³;
dans laquelle R¹ est une fraction hydrocarbyle aliphatique ou aromatique substituée ou non substituée ; et R² et R³ sont des groupes fonctionnels indépendamment sélectionnés à partir du groupe consistant en chlorure d'acétyle, carboxyle, ester, isocyanates, vinyle, acrylate, amine, aldéhyde et hydroxyle ; et
comprenant en outre l'application de la composition de matière conductrice au substrat polymère.

9. Procédé selon la revendication 8, dans lequel la composition de matière conductrice est appliquée au substrat polymère par revêtement à la tournette, pulvérisation, revêtement par immersion, impression en sérigraphie, ou impression à jet d'encre.
